# EUROPEAN PATENT SPECIFICATION

(11) **EP 1 233 225 B1**
(45) Date of publication and mention of the grant of the patent: **02.08.2006**
(21) Application number: 02251011.9
(22) Date of filing: 14.02.2002
(51) Int. Cl.: F16L 19/08, F16L 37/092

(54) **Improvements in or relating to tube couplings**
Verbesserungen an oder bezüglich Rohrkupplungen
Améliorations à ou concernant des raccords de tuyaux

(30) Priority: 15.02.2001 GB 0103774
(43) Date of publication of application: 21.08.2002
(73) Proprietor: John Guest International Limited, West Drayton, Middlesex UB7 8JL (GB)
(72) Inventor: Guest, John Derek, Bray, Maidenhead SL6 2EX (GB)
(74) Representative: Bayliss, Geoffrey Cyril

(56) References cited:
- FR-A- 2 227 483
- FR-A- 2 394 736
- US-A- 4 867 489

## Description

This invention relates to tube couplings which may be single or multiple tube couplings providing inline, elbow or T-couplings or tube closures.

Our "Speedfit" tube connector (UK Patent No. 1520742 and others) has a coupling body with a throughway open at one end and a tapered cam surface in the open end to receive a collet for locking a tube in the coupling. The collet is compressed against the tube by a slight withdrawal of the tube and collet from the coupling body which locks the tube in the coupling body. The collet can be depressed into the body to release the tube.

Our "SuperSeal" design (UK Patent No. 2167147) has a separate sleeve screwed onto the open end of the coupling body in which the tapered cam is formed. By screwing the sleeve onto the coupling body the gripping action of the collet on the tube is increased. Also the collet becomes locked up in the coupling body and cannot be depressed to release the tube.

Our "Speedfit/Superseal" coupling (European Patent Application No. 0945662) comprises a coupling body having a throughway open at one end to receive an end portion of a tube and having an internal cam surface tapering towards the open end in which a collet is located for locking the tube in the coupling body by engagement with the tapered cam surface, and having step means to limit entry of the collet into the throughway, the coupling body having a main body the throughway of which receives the end of a tube and contains said step means to limit insertion of the collet and an end cap in screwthreaded engagement with the main body containing said open end to the throughway and the tapered cam surface, and indexing means between the end cap and main body to define different positions of rotational adjustment in the first of which a tube can be inserted and, by depressing the collet into the coupling body, released from the coupling body and in the second of which the collet is engaged with the step means to prevent the collet being depressed into the coupling body to release the tube. In the preferred arrangement the end cap has an internally threaded sleeve portion encircling and in screwthreaded engagement with an external thread on the main body.

In the latter construction, an "O" ring seal is provided in the throughway in the coupling body to engage and seal with the outer surface of the tube. The seal is spaced from the ends of the collet by a washer or sleeve. This arrangement provides small cavities between adjacent components in which liquids can penetrate and become trapped and difficult to remove by cleaning. Such entrapped liquids can deteriorate over a period of time and cause contamination in subsequent liquid flowing through the coupling.

FR-A-2394736 discloses a tube coupling to receive and hold a tube according to the preamble of claim 1, the tube coupling comprising a coupling body having a throughway open at one end to receive a tube, an annular step in the throughway facing the open end to receive an end of the tube, an end cap engaging the coupling body for axial movement between forward and retracted positions in the coupling body, the end cap having an opening for the tube, a collar encircling the tube and two compression members engaging the ends of the collar having connections to the collar which sever with initial axial force on the compression members towards one another following the ends of the collar are compressed radially inwardly by the compression members against the tube to lock the tube in the coupling.

It is an objection of the present invention to provide a coupling having a combination of the "Speedfit" and "Superseal" features referred to above in which any potential leak path from an end of a tube in the coupling body is minimised.

According to claim 1, this invention provides a tube coupling to receive and hold a tube comprising a coupling body having a throughway with an open end to receive a tube, an annular step in the throughway facing the open end to receive an end of the tube, an end cap engaging the coupling body for axial movement between forward and retracted positions on the coupling body, the end cap having an opening for the tube to extend through, a tube locking device mounted in the end cap to receive and lock the tube in the end cap, a seal located in the coupling body between the step and the open end of the coupling body, the seal being in the form of an annular sleeve encircling the throughway, and having an in-turned annular flange at one end which engages with the annular step to receive and seal with a face at an end of the tube inserted into the throughway, and means operable by advancing the end cap along the coupling body for compressing the seal around the outer surface of the tube adjacent said tube end to seal with the tube, said advancing of the end cap also being arranged to move a tube held by said locking device in the end cap into the coupling body to engage the end of the tube against the in-turned annular flange of the seal, wherein the means for compressing the seal around the tube comprises a compression sleeve mounted in the cap and projecting into the open end of the throughway around the seal, forward movement of the end cap moving the compression sleeve between the seal and throughway to compress the seal inwardly into sealing engagement with the tube and retraction of the end cap withdrawing the compression sleeve from the seal to release the seal from the tube.

In a preferred arrangement a portion of the throughway extending from the annular step away from the open end of the coupling body, an inner periphery of the in-turned annular flange of the seal, and an inner periphery of the tube are of substantially the same diameter to provide a smooth continuous passage between the tube and coupling body.

More specifically the inner surface of the compression sleeve and/or the outer surface of the seal may be tapered to cause the seal to be compressed inwardly with extension of the sleeve around the seal.

For example the inner periphery of the compression sleeve tapers towards the end of the sleeve mounted in the cap to cause the seal to be compressed inwardly with extension of the sleeve around the seal.

Alternatively the outer periphery of the seal may be tapered towards the open end of the coupling body so that the seal is compressed inwardly by extending the compression sleeve over the seal.

In any of the above arrangements the end of the seal adjacent the annular step in the coupling body may be formed with a T-shaped head engaging the step, the inner limb of the head providing the inturned flange of the seal and the outer limb of the head having a snap engagement in a recess in the throughway adjacent said annular step to retain the sleeve in the coupling body.

Also in any of the above arrangements the end of the compression sleeve mounted in the end cap may be formed with a T-shaped head which is engaged in a seat formed in the end cap between an annular shoulder on the end cap facing the coupling body and an annular rib in the throughway to retain the head in the seat and to ensure that the sleeve is retracted from engagement with the seal when the cap is retracted with respect to the coupling body to release the seal from the tube.

According to a feature of the invention a device is mounted in the open end of the cap to receive and lock a tube in the cap.

More specifically the device may comprise a collet mounted in said opening in the end cap and having resilient arms extending into the end cap formed with heads at their inner ends to engage a tube extending through the collet into the coupling body, the end cap having a tapered cam surface reducing towards the opening in the end cap with which the heads of the collet arms are engageable to be compressed inwardly into gripping engagement with a tube extending through the end cap into the coupling body to lock the tube in the end cap so that movement of the end cap into the forward position draws the tube into the coupling body to engage the end of the tube with the inturned flange of the seal and retraction of the end cap retracts the tube from the seal flange.

Furthermore the ends of the resilient arms of the collet may engage the head on the compression sleeve to press the compression sleeve forwardly into the open end of the coupling body around the seal with forward movement of the end cap on the coupling body and retraction of the end cap on the coupling body withdraws the compression ring.

In any of the above arrangements the end cap may encircle a portion of the coupling body. In addition the end cap may be in screw threaded engagement with the coupling body whereby rotation of the end cap in one direction on the coupling body advances the end cap onto the coupling body and rotation in the opposite direction retracts the end cap.

According to a further feature of the invention the end cap and coupling body have a cam arrangement or bayonet fitting to define said forward and retracted positions of the end cap on the coupling body.

In another feature of the invention index means is provided which act between the end cap and coupling body to define forward and retract positions of the end cap with respect to the coupling body.

The following is a description of some specific embodiments of the invention, reference being made to the accompanying drawings in which:
Figure 1 is a cross-sectional view through a tube coupling in accordance with the invention comprising a coupling body having and end cap with a collet for receiving and locking a tube in the coupling body and a sleeve form seal in the coupling body for sealing with and end of the tube and the adjacent outer surface of the tube;
Figure 2 is a similar view to that of Figure 1 with a tube located in the coupling body and held in place by the collet with the seal disengaged;
Figure 3 is a similar view to Figure 2 showing the collet in the enhanced gripping mode and the seal compressed around the outer surface of the tube; and
Figure 4 shows the coupling with the enhanced gripping action of the collet with the tube removed and the seal released from the tube.

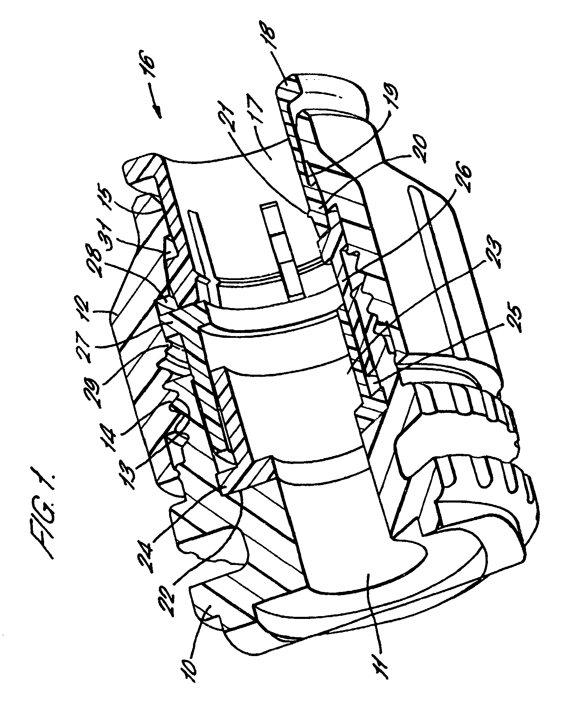

Referring firstly to Figure 1 of the drawings, there is shown a tube coupling which is generally of the form described and illustrated in our European Patent publication No. 0945662. That application discloses a tube coupling embodying features of our "Speedfit" tube connector which forms the subject of our UK Patent No. 1520742 with the features of our "Superseal" connector as described in our UK Patent No. 2167147. The tube coupling comprises a coupling body having a main body part end cap on the body part, and a collet for gripping a tube to be locked in the coupling body located in the end cap with a seal for engaging the tube is located in the main body part. In one position of the end cap on the main body part, a tube can be locked in or released from the coupling body by the collet as described in our UK Patent Publication No. 1520742. The gripping action of the collet on the tube can be enhanced by screwing the end cap further onto the main body part of the coupling as described in our UK Patent Publication No. 2167147 and means are provided as described in our European Patent Publication no. 0945662 to index the movement of the end cap with respect to the main body part so that the end cap is readily adjustable between the first position in which a tube can be engaged by a collet but readily released when required and a second position in which the tube is locked against release in the collet.

In accordance with the present invention, a tube connector comprises a coupling body 10 having a throughway 11 open at one end 11a to receive a tube and an end cap 12 screwed onto the main body part by screw-threads 13 and 14 respectively on the coupling body 10 and end cap 12. Index means are provided on the end cap and coupling body for determining index positions of rotation of the end cap 12 and body 10 as described later.

The end cap 12 has an open end 15 in which a collet indicated generally at 16 is engaged. The collet comprises an annular portion 17 which projects from the open end 15 of the end cap and is formed with an out turned annular flange or head 18 which can be manually gripped for manipulating the collet. A portion of the collet extending into the throughway in the end cap has axially extending resilient arms 19 with which terminate in heads 20 having integral barbs or teeth 21 on the inner sides thereof to grip the tube extending through the collet.

There is a tapered cam surface 31 formed in the end cap with which the heads 20 of the collet 16 are engageable to be compressed inwardly as the collet is drawn outwardly of the throughway to cause the barbs 21 on the inner sides of the heads of the collet to grip and engage a tube extending through the collet.

The throughway 11 in the main body part is formed with a step 22 facing the open end of the coupling body to receive an end of a tube to be connected in the coupling body. A sleeve form seal 23 is mounted in the coupling body and is formed with an annular T-shaped head 24 which abuts an annular step 22 in the main body part. The inner portion of the T-shaped head 24 provides a seal supported by the step 22 to receive an end of a tube to be secured in the coupling body as described later. The end of the tube is cut square to ensure full engagement with the seal. The internal diameter of the T-shaped head 24 is substantially the same as that of the adjacent part of the throughway 11 and also the internal diameter of the tube to form a uninterrupted surface from the tube to the throughway.

The head 24 of the seal is a snap-fit in the throughway of the coupling body adjacent the step 22 to retain the seal in place in the body part. An annular gap 25 is formed between the outer side of the sleeve 23 and the encircling wall of the throughway into which a compression sleeve 26 mounted on the end cap 12 extends. The compression sleeve also has a T-shaped head 27 which is mounted in the end cap between a shoulder 28 on the end cap facing into the throughway and a retaining bead 29 encircling the inner side of the end cap.

The inner diameter of the sleeve tapers from a maximum adjacent the free end of the sleeve to a minimum adjacent the head 27 of the sleeve so that as the sleeve is forced over the seal 23, the seal is pressed inwardly to seal with a tube extending through the sleeve.

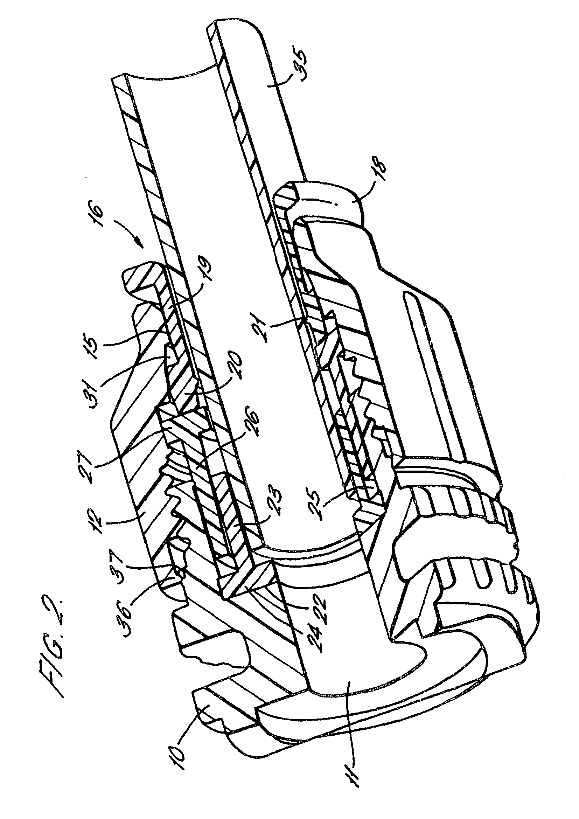

Reference is now made to Figure 2 of the drawings which shows the coupling body of Figure 1 with a tube inserted into the coupling body through the collet and seal but not pushed fully into engagement with the T-shaped head 24. The end cap 12 is in its retracted position in which the tube which is indicated at 35 is locked by the collet in the end cap. In this position the seal does not engage the tube as can be seen by the narrow gap between the outer periphery of the tube and inner periphery of the sleeve. Figure 2 also shows an arrangement of projecting annular bumps on the body and mouth of the end cap 36 and 37 respectively which prevent the end cap from being fully detached from the body part.

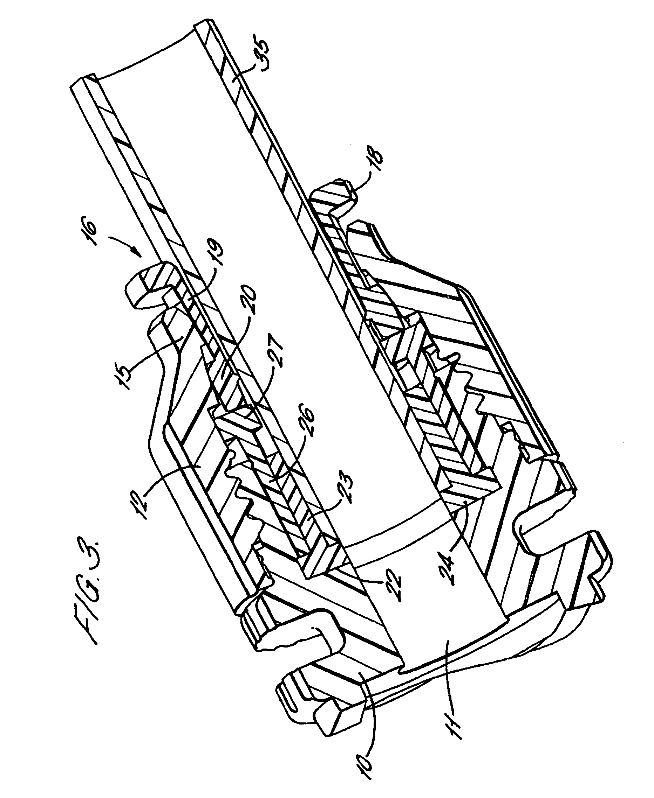

Referring now to Figure 3 of the drawings, the tube has been pushed fully home into the coupling body by screwing the endcap 12 in which the tube is locked by the collet further onto the coupling body to engage and seal the tube end with the head 24. The ends of the arms of the collet engage the head 27 of the compression sleeve forcing the sleeve further into the main body part of the coupling. This movement, in turn, causes the tapered internal diameter of the compression sleeve to press the seal 23 inwardly into sealing engagement with the tube as can be seen in Figure 3. The seal formed between the end of the tube and the head 24 together with the seal formed between the inner surface of the sleeve 23 and outer surface of the tube prevents escape of fluid from the end of the tube into the components of the coupling body. This prevents escape of fluid around the outer side of the tube. In an alternative arrangement, the compression sleeve engages directly with the end cap which forces the sleeve into the coupling body with advance of the end cap.

As indicated earlier the throughway beyond the step 22, the inner diameter of the head 24 and the inner bore of the tube are all substantially flush with one another to provide a smooth flow through the connection without openings between adjacent components into which fluid could penetrate. The arrangement thus avoids features which are difficult to clean and instead provides a smooth, generally flush surface through the coupling body which is easy to maintain and clean.

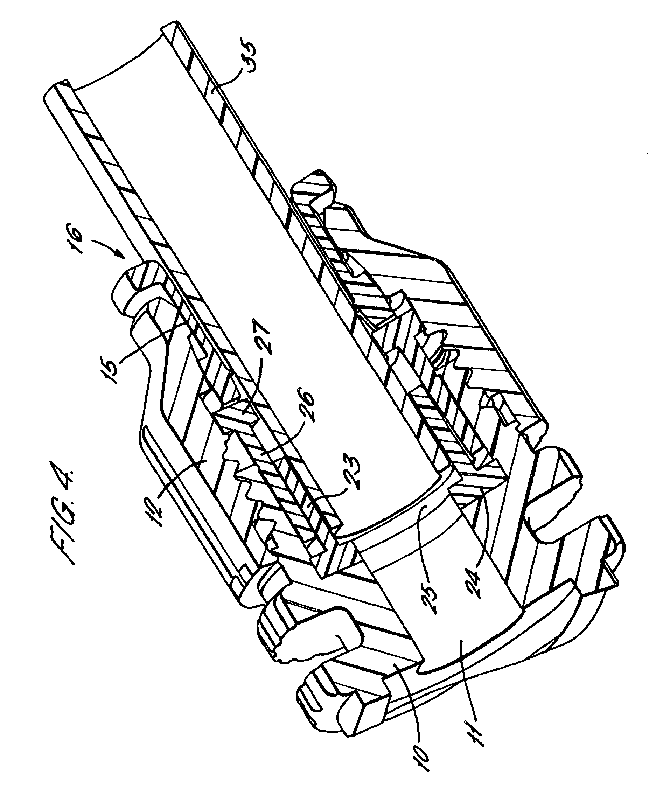

Figure 4 of the drawings shows the arrangement of a further position in which the end cap has been adjusted to allow release of the tube.

Although not illustrated, the end cap and main body part have interengaging devices which define positions of rotational index movement between the end cap and body part in which a tube is held by a collet and in which the gripping action of the collet on the tube is enhanced and the tube is also engaged by the seal in the main body part of the coupling respectively.

In summary the arrangement is an enhancement of our current "Superseal" designs in allowing the resulting connection to be clean, smooth and 'bug-free' along its length internally.

Primarily, the new arrangement consists of a "Superseal" coupling with the incorporation of a new moulded seal surrounded by a tapered compression sleeve.

The seal is tubular along its length with a flat T shaped end. The T shaped end seals on its o.d. against the fitting body's i.d. In addition, it will also seal against the end of the tube when in the Superseal position. The i.d. of the tubular section is slightly larger than the tube o.d. to allow easy tube inserted when in the "Speedfit" position. The seal is retained in position within the fittings body by a snap-fit around the T shaped end. The seal can be made out of any suitable pliable material. The initial market for this new product is drinks dispense and therefore the seal should be made out of a food quality material such as silicon rubber or nitrile.

The compression ring is similar in shape to the seal but with a slow tapered i.d. along the tubular section. The slow tapered i.d. has a major diameter larger and a minor diameter smaller than the o.d. of the seal. The compression sleeve is retained in position relative to the screw cap by a snap-fit around the o.d. of the T shaped end but is pushed forward along the length of the seal by the end of the collet when the cap is screwed into the Superseal position. An alternative arrangement could allow an internal shoulder in the cap to push the compression ring forward over/along the seal.

### HOW THE FITTING WORKS

1. Initially the fitting should be in the Speedfit position/condition: i.e. the screw cap in a position whereby the collet is free to allow tube insertion and allow release of the tube when it is pushed into its release position as shown in Figure 1.
2. The tube end should be cut square and inserted fully into the fitting so that the square cut end abuts the T shaped end of the seal as shown in Figure 2.
3. The screw cap is rotated in to the "Superseal" position. As this is done, the collet continues to grip the tube and thereby drives the square cut end firmly into the T shaped end of the seal. In addition, the end of the collet (or a shoulder in the screw cap in an alternative arrangement) drives the compression ring along the length of the seal and, as its minor internal diameter is smaller than the seals o.d., it compresses the seal radially onto the tube as shown in Figure 3.
4. The seal forms intimate contact across and around the tube end and along the length of the tube o.d. within the length of the tubular portion of the seal. The T shaped end is also squeezed by end of the tube against the shoulder of the body leading into the through bore of the fitting. Ideally the i.d. of the tube, T shaped seal end and fitting through bore should be the same (see Figure 3).
5. The resulting tube connection provides a continuous through-bore with no gaps or discontinuities between tube, seal or body i.d.s. The T shaped seal and seals both against the bodies i.d. and its shoulder leading to its through bore. The i.d. of the seal also forms a continuous seal along the full length of the tubular seal (see Figure 3).
6. The fitting can be easily released by unscrewing the cap back into the Speedfit position and pushing the collet into its release position as shown in Figure 4.
7. As the cap is un-screwed the snap-fit between cap and compression ring pulls the compression ring off the seals o.d. thereby removing the seals interference and friction on the tube. The tube can now be extracted. The seal remains in-situ as it is retained in a snap-fit within the fittings body (see Figure 1).

### ADVANTAGE OF THE DESIGN

When in the Superseal position, the fitting provides a connection with no gaps for fluid to be trapped and thereby allow the fluid to fester by not flowing continuously or by not being effectively cleaned or chemically sanitised. The fitting remains simple to use and re-useable.

## Claims

1. A tube coupling to receive and hold a tube comprising:
a coupling body (10) having a throughway (11) with an open end (11a) to receive a tube (35),
an annular step (22) in the throughway facing the open end to receive an end of the tube,
an end cap (12) engaging the coupling body for axial movement between forward and retracted positions on the coupling body, the end cap having an opening (15) for the tube to extend through,
a tube locking device (16) mounted in the end cap to receive and lock the tube in the end cap,
a seal (23) located in the coupling body between the step and the open end of the coupling body, the seal being in the form of an annular sleeve encircling the throughway, and having an in-turned annular flange (24) at one end which engages with the annular step to receive and seal with a face at an end of the tube inserted into the throughway,
and means (26) operable by advancing the end cap along the coupling body for compressing the seal around the outer surface of the tube adjacent said tube end to seal with the tube, said advancing of the end cap also being arranged to move a tube held by said locking device in the end cap into the coupling body to engage the end of the tube against the in-turned annular flange of the seal;
**characterised in that** the means for compressing the seal around the tube comprises a compression sleeve (26) mounted in the cap and projecting into the open end of the throughway around the seal, forward movement of the end cap (12) moving the compression sleeve between the seal and throughway to compress the seal inwardly into sealing engagement with the tube and retraction of the end cap withdrawing the compression sleeve from the seal to release the seal from the tube.

2. A tube coupling as claimed in claim 1, **characterised in that** a portion of the throughway (11) extending from the annular step (22) in a direction away from the open end (11a) of the coupling body, an inner periphery of the in-turned annular flange (24) of the seal, and an inner periphery of the tube (35) are of substantially the same diameter to provide a smooth continuous passage between the tube and coupling body.

3. A tube coupling as claimed in claim 1 or claim 2, **characterised in that** at least one of the inner surface of the compression sleeve (26) or the outer surface of the (23) seal is tapered to cause the seal to be compressed inwardly with extension of the compression sleeve around the seal.

4. A tube coupling as claimed in claim 3, **characterised in that** the inner periphery of the compression sleeve (26) tapers towards the end of the compression sleeve located in the end cap (12) to cause the seal (23) to be compressed inwardly with extension of the compression sleeve around the seal.

5. A tube coupling as claimed in claim 4, **characterised in that** the outer periphery of the seal (23) is tapered towards the open end (11a) of the coupling body so that the seal is compressed inwardly by extending the compression sleeve over the seal.

6. A tube coupling as claimed in any of claims 1 to 5, **characterised in that** an end of the compression sleeve(26) located in the end cap (12)w is formed with a T-shaped head (27) which is engaged in a seat (28) formed in the end cap between an annular shoulder on the end cap facing the coupling body and an annular rib (29), in the end cap to retain the head in the seat and to ensure that the compression sleeve is retracted from engagement with the seal when the end cap is retracted with respect to the coupling body to release the seal from the tube.

7. A tube coupling as claimed in any of the preceding claims, **characterised in that** the end of the seal (23) adjacent the annular step (22) in the coupling body (10) is formed with a T-shaped head (24) engaging the step, an inner limb of the head providing the in-turned annular flange of the seal and an outer limb of the head having a snap engagement in a recess in the throughway adjacent said annular step to retain the seal in the coupling body.

8. A tube coupling as claimed in any of the preceding claims, **characterised in that** the tube locking device comprises a collet (17) located in said opening (15) in the end cap (12) and having resilient arms (19) extending into the end cap formed with heads (20) at their inner ends to engage a tube (35) extending through the collet into the coupling body, the end cap having a tapered cam surface (31) reducing towards the opening in the end cap with which the heads of the collet arms are engageable to be compressed inwardly into gripping engagement with the tube extending through the end cap into the coupling body to lock the tube in the end cap so that movement of the end cap into the forward position draws the tube into the coupling body to engage the end of the tube with the in-turned flange of the seal and retraction of the end cap retracts the tube from the flange of the seal.

9. A tube coupling as claimed in any of the preceding claims, **characterised in that** the end cap (12) encircles a portion of the coupling body (10).

10. A tube coupling as claimed in any of the preceding claims, **characterised in that** the end cap (12) is in screw threaded engagement with the coupling body (10) whereby rotation of the end cap in one direction on the coupling body advances the end cap onto the coupling body and rotation in the opposite direction retracts the end cap.

11. A tube coupling as claimed in claim 10, further comprising means (36,37) between the end cap (12) and coupling body (10) for defining forward and retracted positions of the end cap with respect to the coupling body.

## Patentansprüche

1. Rohrkupplung zum Aufnehmen und Halten eines Rohres, die aufweist:
einen Kupplungskörper (10) mit einem Durchgang (11) mit einem offenen Ende (11a) zum Aufnehmen eines Rohrs (35),
eine ringförmige Stufe (22) im Durchgang, die zum offenen Ende gerichtet ist, um ein Ende des Rohrs aufzunehmen,
eine Endkappe (12), die am Kupplungskörper für axiale Bewegung zwischen vorderen und zurückgezogenen Stellungen auf dem Kupplungskörper angreift, wobei die Endkappe eine Öffnung (15) aufweist, durch die sich das Rohr hindurch erstrecken soll,
eine Rohrverriegelungseinrichtung (16), die in der Endkappe angebracht ist, um das Rohr in der Endkappe aufzunehmen und zu verriegeln,
eine Dichtung (23), die im Kupplungskörper zwischen der Stufe und dem offenen Ende des Kupplungskörpers angeordnet ist, welche Dichtung die Form einer ringförmigen Hülse hat, die den Durchgang umgibt und einen nach innen gerichteten ringförmigen Flansch (24) an einem Ende aufweist, der mit der ringförmigen Stufe in Eingriff ist, um eine Fläche an einem Ende des Rohrs, das in den Durchgang eingefügt ist, aufzunehmen und damit abzudichten,
und Mittel (26) die durch Vorrücken der Endkappe entlang dem Kupplungskörper zum Zusammendrücken der Dichtung um die äußere Oberfläche des Rohres dem Rohrende benachbart betätigbar sind, um mit dem Rohr zu dichten, welches Vorrücken der Endkappe auch dazu ausgebildet ist, ein Rohr, das durch die Verriegelungseinrichtung in der Endkappe gehalten ist, in den Kupplungskörper zu bewegen, um das Ende des Rohres gegen den nach innen gerichteten ringförmigen Flansch der Dichtung in Eingriff zu bringen;
**dadurch gekennzeichnet, dass** die Mittel zum Zusammendrücken der Dichtung um das Rohr eine Kompressionshülse (26) aufweisen, die in der Kappe angebracht ist und in das offene Ende des Durchgangs um die Dichtung herum vorsteht, wobei Vorwärtsbewegung der Endkappe (12) die Kompressionshülse zwischen der Dichtung und dem Durchgang bewegt, um die Dichtung nach innen im dichtenden Eingriff mit dem Rohr zu drücken und Zurückziehen der Endkappe die Kompressionshülse von der Dichtung zurückzieht, um die Dichtung vom Rohr zu lösen.

2. Rohrkupplung nach Anspruch 1, **dadurch gekennzeichnet, dass** ein Teil des Durchgangs (11), der sich von der ringförmigen Stufe (22) in eine Richtung weg vom offenen Ende (11a) des Kupplungskörpers wegerstreckt, der innere Umfang des nach innen gerichteten ringförmigen Flansches (24) der Dichtung und der innere Umfang des Rohrs (35) im Wesentlichen den selben Durchmesser haben, um einen glatten ununterbrochenen Durchlass zwischen dem Rohr und dem Kupplungskörper zu schaffen.

3. Rohrkupplung nach Anspruch 1 oder 2, **dadurch gekennzeichnet, dass** wenigstens eine der inneren Oberfläche der Kompressionshülse (26) oder der äußeren Oberfläche der Dichtung (23) konisch ist, um zu bewirken, dass die Dichtung bei der Ausweitung oder Ausdehnung der Kompressionshülse um die Dichtung nach innen zusammengedrückt wird.

4. Rohkupplung nach Anspruch 3, **dadurch gekennzeichnet, dass** der innere Umfang der Kompressionshülse (26) zum Ende der Kompressionshülse, das in der Endkappe (12) angeordnet ist, kegelförmig verjüngt ist, um zu bewirken, dass die Dichtung (23) nach innen bei Aufweitung oder Ausdehnung der Kompressionshülse um die Dichtung zusammengedrückt wird.

5. Rohrkupplung nach Anspruch 4, **dadurch gekennzeichnet, dass** der äußere Umfang der Dichtung (23) zum offenen Ende (11a) des Kupplungskörpers kegelförmig verjüngt ist, so dass die Dichtung nach innen zusammengedrückt wird, wenn die Kompressionshülse über die Dichtung aufgeweitet oder ausgedehnt wird.

6. Rohrkupplung nach einem der Ansprüche 1 bis 5, **dadurch gekennzeichnet, dass** ein Ende der Kompressionshülse (26), das in der Endkappe (12) angeordnet ist, mit einem T-förmigen Kopf (27) ausgebildet ist, der in einem Sitz (28) in Engriff ist, der in der Endkappe zwischen einer ringförmigen Schulter auf der Endkappe, die zum Kupplungskörper gerichtet ist und einer ringförmigen Rippe (29) in der Endkappe ausgebildet ist, um den Kopf im Sitz zu halten und sicherzustellen, dass die Kompressionshülse von Eingriff mit der Dichtung zurückgezogen wird, wenn die Endkappe in Bezug auf den Kupplungskörper zurückgezogen wird, um die Dichtung vom Rohr zu lösen.

7. Rohrkupplung nach einem der vorangehenden Ansprüche, **dadurch gekennzeichnet, dass** das Ende der Dichtung (23), dass der ringförmigen Stufe (22) im Kupplungskörper (10) benachbart ist, mit einem T-förmigen Kopf (24) ausgebildet ist, der an der Stufe angreift, wobei der innere Schenkel des Kopfes den nach innen gerichteten ringförmigen Flansch der Dichtung bildet und der äußere Schenkel des Kopfes einen Schnappeingriff mit einer Ausnehmung in dem Durchgang nahe bei der ringförmigen Stufe hat, um die Dichtung im Kupplungskörper festzuhalten.

8. Rohrkupplung nach einem der vorangehenden Ansprüche, **dadurch gekennzeichnet, dass** die Rohrverriegelungseinrichtung eine Klemmhülse (17) aufweist, die in der Öffnung (15) in der Endkappe (12) angeordnet ist und nachgiebige Arme (19) aufweist, die sich in die Endkappe erstrecken und an ihren inneren Enden (20) mit Köpfen ausgebildet sind, um an einem Rohr (35) anzugreifen, das sich durch die Klemmhülse in den Kupplungskörper erstreckt, wobei die Endkappe eine konische Nockenoberfläche (31) hat, die sich zur Öffnung in Endkappe verkleinert, mit der die Köpfe der Klemmhülsenarme in Eingriff kommen können, um nach innen in greifenden Eingriff mit dem Rohr gedrückt zu werden, das sich durch die Endkappe in den Kupplungskörper erstreckt, um das Rohr in der Endkappe zu verriegeln, so dass Bewegung der Endkappe in die vordere Stellung das Rohr in den Kupplungskörper hineinzieht, um das Ende des Rohrs mit dem nach innen gerichteten Flansch der Dichtung in Eingriff zu bringen, und Zurückziehen der Endkappe das Rohr vom Flansch der Dichtung zurückzieht.

9. Rohrkupplung nach einem der vorangehenden Ansprüche, **dadurch gekennzeichnet, dass** die Endkappe (12) einen Teil des Kupplungskörpers (10) umgibt.

10. Rohrkupplung nach einem der vorangehenden Ansprüche, **dadurch gekennzeichnet, dass** die Endkappe (12) in Schraubengewindeeingriff mit dem Kupplungskörper (10) ist, wobei Drehung der Endkappe in eine Richtung auf dem Kupplungskörper die Endkappe in den Kupplungskörper nach vorwärts bewegt und Drehung in der umgekehrten Richtung die Endkappe zurückzieht.

11. Rohrkupplung nach Anspruch 10, die weiter Mittel (36, 37) zwischen der Endkappe (12) und dem Kupplungskörper (10) aufweist, um vordere und zurückgezogene Stellungen der Endkappe in Bezug auf den Kupplungskörper zu begrenzen.

## Revendications

1. Raccord de tuyau servant à recevoir et maintenir un tuyau, comprenant :
un corps de raccord (10) ayant un passage traversant (11) avec une extrémité ouverte (11a) afin de recevoir un tuyau (35),
un gradin annulaire (22) dans le passage traversant faisant face à l'extrémité ouverte afin de recevoir une extrémité du tuyau,
un bouchon d'extrémité (12) venant en prise avec le corps de raccord pour déplacement axial entre des positions avant et rétractée sur le corps de raccord, le bouchon d'extrémité ayant une ouverture (15) pour que le tuyau puisse passer à travers,
un dispositif de verrouillage de tuyau (16) monté dans le bouchon d'extrémité afin de recevoir et de verrouiller le tuyau dans le bouchon d'extrémité,
un joint (23) disposé dans le corps de raccord entre le gradin et l'extrémité ouverte du corps de raccord, le joint étant sous la forme d'un manchon annulaire encerclant le passage traversant, et ayant une bride annulaire tournée vers l'intérieur (24) au niveau d'une extrémité qui vient en prise avec le gradin annulaire afin de recevoir et d'établir une étanchéité avec une face au niveau d'une extrémité du tuyau inséré dans le passage traversant,
et un moyen (26) pouvant être actionné en avançant le bouchon d'extrémité le long du corps de raccord pour comprimer le joint autour de la surface externe du tuyau adjacente à ladite extrémité de tuyau afin d'établir une étanchéité avec le tuyau, ladite avance du bouchon d'extrémité étant également organisée pour déplacer un tuyau maintenu dans le corps de raccord par ledit dispositif de verrouillage situé dans le bouchon d'extrémité afin de venir en prise avec l'extrémité du tuyau contre la bride annulaire tournée vers l'intérieur du joint ;
**caractérisé en ce que** le moyen pour comprimer le joint autour du tuyau comprend une douille de compression (26) montée dans le bouchon et faisant saillie dans l'extrémité ouverte du passage traversant autour du joint, un déplacement vers l'avant du bouchon d'extrémité (12) déplaçant la douille de compression entre le joint et le passage traversant pour comprimer le joint vers l'intérieur et le mettre en prise de manière étanche avec le tuyau et un retrait du bouchon d'extrémité retirant la douille de compression du joint pour dégager le joint du tuyau.

2. Raccord de tuyau selon la revendication 1, **caractérisé en ce qu'**une partie du passage traversant (11) s'étendant depuis le gradin annulaire (22) dans un sens opposé à l'extrémité ouverte (11a) du corps de raccord, une périphérie interne de la bride annulaire tournée vers l'intérieur (24) du joint, et une périphérie interne du tuyau (35) sont sensiblement de même diamètre afin de constituer un passage lisse continu entre le tuyau et le corps de raccord.

3. Raccord de tuyau selon la revendication 1 ou 2, **caractérisé en ce qu'**au moins une de la surface interne de la douille de compression (26) ou de la surface externe du joint (23) est biseautée pour amener le joint à être comprimé vers l'intérieur lorsque la douille de compression s'étend autour du joint.

4. Raccord de tuyau selon la revendication 3, **caractérisé en ce que** la périphérie interne de la douille de compression (26) s'amenuise vers l'extrémité de la douille de compression située dans le bouchon d'extrémité (12) pour amener le joint (23) à être comprimé vers l'intérieur lorsque la douille de compression s'étend autour du joint.

5. Raccord de tuyau selon la revendication 4, **caractérisé en ce que** la périphérie externe du joint (23) est biseautée vers l'extrémité ouverte (11a) du corps de raccord de sorte que le joint est comprimé vers l'intérieur lorsque la douille de compression s'étend par-dessus le joint.

6. Raccord de tuyau selon l'une quelconque des revendications 1 à 5, **caractérisé en ce qu'**une extrémité de la douille de compression (26) située dans le bouchon d'extrémité (12) a une tête en forme de T (27), qui est mise en prise dans un siège (28) formé dans le bouchon d'extrémité entre un épaulement annulaire se trouvant sur le bouchon d'extrémité faisant face au corps de raccord et une nervure annulaire (29) à l'intérieur du bouchon d'extrémité, pour retenir la tête dans le siège et assurer que la douille de compression n'est plus en prise avec le joint quand le bouchon d'extrémité est rétracté par rapport au corps de raccord afin de libérer le joint du tuyau.

7. Raccord de tuyau selon l'une quelconque des revendications précédentes, **caractérisé en ce que** l'extrémité du joint (23) adjacente au gradin annulaire (22) dans le corps de raccord (10) a une tête en forme de T (24) venant en prise avec le gradin, une branche interne de la tête constituant la bride annulaire tournée vers l'intérieur du joint et une branche externe de la tête ayant une mise en prise rapide dans une cavité du passage traversant adjacent audit gradin annulaire afin de retenir le joint dans le corps de raccord.

8. Raccord de tuyau selon l'une quelconque des revendications précédentes, **caractérisé en ce que** le dispositif de verrouillage de tuyau comprend une douille (17) située dans ladite ouverture (15) à l'intérieur du bouchon d'extrémité (12) et ayant des parois résilientes (19) s'étendant dans le bouchon d'extrémité, formées avec une tête (20) au niveau de leurs extrémités internes pour venir en prise avec un tuyau (35) qui s'étend à travers la douille dans le corps de raccord, le bouchon d'extrémité ayant une surface de came biseautée (31) s'amenuisant vers l'ouverture dans le bouchon d'extrémité, avec laquelle la tête des parois de douille peut venir en prise pour être comprimée vers l'intérieur et retenue en prise avec le tuyau passant à travers le bouchon d'extrémité dans le corps de raccord, dans le but de verrouiller le tuyau dans le bouchon d'extrémité de telle sorte que tout déplacement du bouchon d'extrémité en position avant tire le tuyau dans le corps de raccord afin de mettre en prise l'extrémité du tuyau avec la bride tournée vers l'intérieur du joint et que tout retrait du bouchon d'extrémité retire le tuyau hors de la bride du joint.

9. Raccord de tuyau selon l'une quelconque des revendications précédentes, **caractérisé en ce que** le bouchon d'extrémité (12) encercle une partie du corps de raccord (10).

10. Raccord de tuyau selon l'une quelconque des revendications précédentes, **caractérisé en ce que** le bouchon d'extrémité (12) est en prise par filetage de vis avec le corps de raccord (10) de sorte que toute rotation du bouchon d'extrémité dans un sens sur le corps de raccord avance le bouchon d'extrémité sur le corps de raccord et que toute rotation dans le sens opposé rétracte le bouchon d'extrémité.

11. Raccord de tuyau selon la revendication 10, comprenant de plus un moyen (36, 37) entre le bouchon d'extrémité (12) et le corps de raccord (10) afin de définir des positions avant et rétractée du bouchon d'extrémité par rapport au corps de raccord.
